# EUROPEAN PATENT SPECIFICATION

(11) **EP 3 590 043 B1**
(45) Date of publication and mention of the grant of the patent: **19.08.2020**
(21) Application number: 18705954.8
(22) Date of filing: 26.02.2018
(51) Int. Cl.: G06F 12/02, G06F 11/10

(54) **MONITORING AND ADJUSTING MEMORY USAGE IN CONNECTED DEVICE SYSTEMS**
ÜBERWACHUNG UND EINSTELLUNG DER SPEICHERNUTZUNG IN VERBUNDENEN VORRICHTUNGSSYSTEMEN
SURVEILLANCE ET RÉGULATION DE L'UTILISATION DE LA MÉMOIRE DANS DES SYSTÈMES DE DISPOSITIFS CONNECTÉS

(30) Priority: 02.03.2017 EP 17158860
(43) Date of publication of application: 08.01.2020
(73) Proprietor: Signify Holding B.V., 5656 AE Eindhoven (NL)
(72) Inventor: SLEGERS, Walter, 5656 AE Eindhoven (NL)
(74) Representative: Verweij, Petronella Daniëlle
(86) International application number: PCT/EP2018/054654
(87) International publication number: WO 2018/158189

(56) References cited:
- US-A1- 2010 122 200
- US-A1- 2015 286 406

## Description

### FIELD OF THE INVENTION

The invention relates to a master device and a system for monitoring memory usage in a connected device system comprising the master device as well as a method for monitoring memory usage in the connected device system and a computer program for executing the method.

### BACKGROUND OF THE INVENTION

An example of a master device may be found for example in the Philips Hue system which is a connected device system in which multiple subsidiary devices are connected to the master device via a wireless network. The subsidiary devices are hereby lighting devices, which may typically include light emitting diodes (LEDs), and can be controlled wirelessly via the master device to provide different lighting effects, such as changing their hue, or to adjust their switch-on/switch-off time.

Within such a connected device system, both the master device as well as the plurality of subsidiary devices are provided with non-volatile memory devices, typically NAND flash memory devices, for storing program code and persistent data. These are rather sensitive devices having a limited lifetime that is typically given by a guaranteed number of write and erase cycles, whereby each memory block of a memory device can only be written and erased for a respective number of times.

Therefore, several techniques to improve the lifetime of NAND flash memory devices have been developed. US 2016/0306570 A1 discloses a technique in which flash-tuning is used to enhance the lifetime of NAND flash memory devices. A number of test chips from a batch of recently manufactured flash memory chips are hereby used to simulate any of various usage scenarios in an offline characterization phase. Software models are used to test candidate sets of operation parameters on the tests chips. This is used in an iterative manner to determine an optimal set of operating parameters for each health stage of a chip's estimated operational lifetime. These operating parameters are then used to tune the flash memory to these parameters when it changes it health stage.

However, this approach requires long term testing of the flash devices, which is rather costly. Further, it may only be performed for a known user behavior.

In the advent of the so-called "Internet-of-Things", though, the internetworking of all kinds of physical devices allows for a variety of new applications in connected device systems. As a result, the predictability in user behavior has become rather limited. Thus, long term testing is limited to the fields of application in which user behavior is well-known, while it may not be performed in cases of rapidly evolving new usage patterns.

US 2010/122200 A1 discloses a solid state storage subsystem having a plurality of blocks, wherein each block has a counter. A host system retrieves usage statistics data, including the content of the counters. The host system transmits this data over a computer network to another node.

### SUMMARY OF THE INVENTION

The invention is set out in the appended set of claims. The dependent claims set out particular embodiments. It is an object of the present invention to provide a master device of a connected device system, a system comprising such a master device and a remote entity, a method to be employed by such master device and a respective computer program, which allow for adjusting memory usage of the memory devices used in the connected device system such as to increase the lifetime of these memory devices.

In a first aspect of the present invention, a master device is presented comprising at least one non-volatile memory device that comprises a plurality of memory blocks, each block being characterized by at least one state parameter, and at least one data processing device. The data processing device is programmed to retrieve at least one state parameter for at least one memory block of the plurality of memory blocks from the non-volatile memory device and report the at least one state parameter for the respective memory block to a remote entity via a network connection. The data processing device is further programmed to receive a response to the reporting from the remote entity which comprises an updated usage algorithm for the non-volatile memory device, and to adjust a usage pattern of the non-volatile memory device in accordance with the updated usage algorithm.

According to this aspect, the master device for a connected device system is provided with a respective data processing device, such as a processor. This data processing device is programmed to obtain information about the state of each memory block of the non-volatile memory devices, typically NAND-flash memory devices, included in the master device during its operational lifetime and frequently report the information to a remote entity. The information about these memory blocks of the non-volatile memory devices is hereby characterized by respective state parameters which may be used as an indication that one particular memory device has been mishandled during transport or belongs to a production batch having an increased amount of bad memory blocks or the like.

To this end, the data processing device may be programmed to report the state parameters periodically at a given time interval. For example, the data processing device may be programmed to report the state parameters every few weeks, every week or on a daily basis. The data processing device may also be programmed to report the state parameters more regularly, such as every hour, every 5 minutes, every minute or every 30 seconds. Alternatively or additionally, the data processing device may be programmed to report the state parameters upon receiving a request from the remote entity. Further alternatively or additionally, the data processing device may be configured to internally process the state parameters to determine whether some issues have arisen for a particular memory device, such as multiple blocks with too many bit faults which may not be recovered any more occurring in that particular memory device. The data processing device may then, in response to this determination, be configured to automatically provide the state parameters to the remote entity.

The data processing device is further configured to report the state parameters via a network connection, such as the Internet. In that context, the data processing device of the master device may be configured to connect to a network service, such as a cloud service and to upload the state parameters to the cloud service. The cloud service may then forward the state parameters to the remote entity directly or may store the state parameters. The data processing device of the master device may also be configured to not connect to the network service directly, but to connect to a user device, such as a smart phone, for example by a Bluetooth service. The user device may then be used to connect to the network service.

To this end, the data processing device of the master device may also upload a unique identifier of the master device to the cloud service, such as to enable the cloud service to uniquely identify the master devices for with the state parameters have been provided and to map the state parameters to their respective master device. The data processing device may further provide the state parameters in a format that allows for mapping the state parameters not only to the master device they have been retrieved for, but also to their respective memory device and/or memory blocks within said master device.

The remote entity receives the state parameters via the network connection. To this end, the remote entity may be a remote server that is connected to the cloud service. The remote entity may also correspond to the cloud service. The remote entity may be configured to retrieve the state parameters. The state parameters may then be evaluated at the remote entity to determine any possible issues regarding the non-volatile memory devices for which memory blocks the respective state parameters have been provided. For example, the remote entity may notice that particular memory devices appear to have a reduced lifetime due to an increased amount of bad memory blocks that were present right from production and may be able to identify that the driver software of the master device is not sufficient to provide proper wear leveling and error correction for these affected memory devices. Additionally, the remote entity may also be able to track the development of bad memory blocks in the respective memory devices and may be able to determine that bad block management, wear leveling and/or error correction may be adjusted in accordance with the development of the bad memory blocks.

Based on the state parameters, the remote entity thus determines any adjustments that have to be made to the usage pattern of the memory devices. To this end, the adjustments made to the usage pattern may include an updating of the driver software of particular memory devices, such as to provide these memory devices with an adjusted bad block management, adjusted wear leveling and/or an update of the error correction codes for the memory blocks of the memory devices. Further, the adjustments made to the usage pattern may also include an updating of the driver software to remove any bugs in said driver software that the remote entity may have derived from the evaluation of the state parameters. The adjustments to the usage pattern may also include a reduction of the load to memory devices that appear to have experienced an increased wear-off in the previously applied usage pattern or the adjustments of the duty cycle of the memory controllers for said memory devices. Finally, the new usage pattern may also take account for changes in user behavior, for example by optimizing wear leveling in particular with respect to those memory devices that are more frequently accessed than those that are rarely used.

The remote entity then generates an updated usage algorithm that defines the new usage pattern. The updated usage algorithm may hereby be manually developed by a respective development team or automatically provided by a development software. Alternatively or additionally, the remote entity may also comprise a database in which several usage algorithms are stored that have previously been applied to the connected device system of the master device or other connected device systems. To this end, these usage algorithms may be mapped to a plurality of state parameters, such that a usage algorithm may be derived for which the state parameters most closely match the state parameters retrieved from the master device. The usage algorithm thus derived may then optionally be adjusted to the retrieved state parameters of the memory devices of the master device.

The remote entity includes the updated usage algorithm in a response sent to the master device. This response is received at the data processing device of the master device. The data processing device then employs the updated usage algorithm to the memory device or memory devices of the master device to adjust the usage pattern in accordance with the usage algorithm. As outlined herein above, the adjustment of the usage pattern may include an adjustment of the block management, wear leveling or error correction for particular memory devices or a reduction of the load on particular memory devices, a change in duty cycle for the respective memory controllers, or the like.

Optionally, the data processing device of the master device may further be configured to communicate with a user device, such as a smart phone or a tablet, provided with a user interface. In this case, the master device may be controlled in response to a user input to the user interface. In this context, the controlling of the master device may include an adjustment of the settings of the master device, an indication that the driver software shall be updated, an indication that the master device shall report the state parameters or the like.

To this end, the communication with the user device may be performed by providing the master device and the user device in the same local area network. The master device may further be connected to a network switch, such as a router, through a wireless or wired connection in a network. In a similar manner, the user device may be connected to the network switch through a wireless or wired connection in the same network, thereby enabling communication between the user device and the master device within the local network. Furthermore, it may also be possible for the master device and the user device to directly connect to each other, for example via a Bluetooth connection. Alternatively, the user device and the master device may both be connected to the cloud service or the remote entity and the user device may be configured to transmit the user input to the master device via the cloud service or the remote entity. In this configuration, the user is enabled to control the master device using the user device from a remote location. For example, the user may be on a vacation trip, but may control the master device of a connected device system that is arranged in his home.

Thus, the invention proposed a way to monitor and report memory usage in a connected device system, such as to enable a dynamic adjustment of the usage pattern of the memory devices that takes account of sudden changes in user behavior and/or different wear-out of the memory devices. By means of this dynamic adjustment, it is possible to prevent a reduced lifetime of particular memory devices and, therefore, subsequent failure of the master device.

In some embodiments, the state parameter comprises an information about a number of times an error correction has been performed on the respective memory block. In accordance with this modification, the data processing device of the master device may report how often an error correction has been applied to each memory block of its one or more memory devices. This enables the remote entity to identify those memory blocks of those memory devices in the master device that are particularly error prone. On the basis of this identification, the remote entity may provide a response including an updated usage algorithm to adjust the usage pattern of the memory devices. The adjustment may be such that the respective memory devices are addressed less frequently in case further memory devices are available, may change the wear leveling to reduce the write and erase operations to the respective memory blocks or may derive that the error correction may be enhanced for these memory devices specifically, such as to avoid unsuccessful error corrections that would lead to an increase of bad memory blocks and gradually decrease the memory capability of the respective memory devices.

In some embodiments, the state parameter may additionally or alternatively comprise an information about a number of times the respective memory block has been addressed in a write operation and/or an erase operation. In accordance with this modification, the master device may report the distribution of write and erase operations among the memory blocks of the respective memory devices. Based on this report, the remote entity may then determine that the wear leveling applied for the memory devices is not sufficient and may evaluate a better wear leveling for the memory devices. The remote entity may then send this improved wear leveling as part of the updated usage algorithm via a response to the master device.

By means of these embodiments it is possible to determine the memory usage issues that have arisen in the connected device system more specifically and to take the necessary measures to prevent early wear out of the memory blocks and to reduce the gradual decrease of the memory capabilities of the memory devices.

In some embodiments, the data processing device in the master device is further programmed to retrieve at least one state parameter for each memory block of a plurality of memory blocks and to determine an indication for each memory block whether said memory block may still be addressed in a write operation and/or an erase operation based on the state parameters. The data processing device then transmits this indication in the report to the remote entity. In some embodiments, the determining whether a memory block may still be addressed in a write operation and/or an erase operation comprises a calculation of a ratio of a first subset of memory blocks and a second subset of memory blocks. The first subset comprises memory blocks that may still be addressed and the second subset comprises memory blocks that may not be addressed any longer.

In accordance with these embodiments, the report provided by the data processing device of the master device includes an information about new bad blocks that have developed due to wear out and/or unsuccessful error correction. Further, the information whether a memory block may or may not be addressed may also indicate that a memory device has reached its memory capacity. Further, the data processing device may determine, for each memory device, a ratio between the still usable memory blocks and the memory blocks that may not be used any longer. The data processing device of the master device may report the ratio together with the information which memory blocks may still be addressed to the remote entity.

In accordance with this report, the remote entity may determine that the usage pattern of the memory device has to be adjusted. The remote entity may hereby determine which memory devices may still be used for write and/or erase operations and which memory devices shall be excluded from these operations. Additionally or alternatively, the remote entity may determine that certain memory devices have to be replaced. To this end, the remote entity may provide a respective indication that certain memory devices require replacement to the manufacturer, for example since too many bad blocks have occurred in said memory devices. The manufacturer may use this information to initiate replacement of the respective memory devices or replacement of the master device as a whole prior to complete failure of the memory devices, thereby preventing failure of the connected device system. In case the master device is replaced as a whole, the manufacturer may transfer the configuration for the particular connected device system of the master device to be replaced to the master device replacing it. The manufacturer may also utilize the information to provide an overview and/or a statistic from which particularly erroneous production batches or particularly error prone memory device models or software versions may be identified. This may enable the manufacturer to avoid these models and software versions in the future and to anticipate possible necessary replacements of devices in other connected device systems that originate from the same production batch.

Additionally or alternatively, the user may be informed about a possible failure of a memory device, for example via a user interface on a user device and may be prompted to replace the respective erroneous memory device or the master device himself or to inform the manufacturer that replacement may be necessary.

These embodiments therefore enable an early identification of memory devices and/or master devices that need replacement. The memory devices or the master device may therefore be quickly replaced prior to their failure. This prevents breakage of the connected device system due to a failed master device.

In some embodiments, the master device is connected to at least one subsidiary device via the network. The at least one subsidiary device comprises a non-volatile subsidiary memory device, which comprises a plurality of subsidiary memory blocks. The data processing device of the master device is further programmed to retrieve at least one state parameter for at least one subsidiary block and to include the at least one state parameter for the at least one subsidiary block into the reporting to the remote entity. The data processing device is further configured to receive a response from the remote entity comprising an updated usage algorithm for the non-volatile subsidiary memory device of the at least one subsidiary device and to adjust the usage pattern of the non-volatile subsidiary memory device in accordance with the updated usage algorithm for the non-volatile subsidiary memory device.

To this end, the retrieval of the state parameters for the memory blocks of the subsidiary memory devices in the subsidiary devices may include each subsidiary device monitoring its own subsidiary memory devices and providing the state parameters to the master device. This provision may hereby be performed at predetermined time intervals. Alternatively or additionally, the provision may also be initialized only, when the subsidiary device recognizes, during monitoring, that an irregularity has occurred in the subsidiary memory devices, such as a particular subsidiary memory device having too many bad blocks or the like. Alternatively, the retrieval of the state parameters may include the master device monitoring all or a subset of the subsidiary memory devices and obtaining the respective state parameters directly.

Further, the adjustment of the usage pattern may include transmitting the updated usage algorithm to each subsidiary device to be employed by said subsidiary device. Alternatively, the master device may be used to employ the usage algorithm on each subsidiary device directly.

In a modification, the at least one subsidiary device comprises at least one subsidiary data processing device, whereby the at least one data processing device of the master device is further programmed to retrieve the at least one state parameter for the at least one subsidiary memory block from the at least one subsidiary data processing device and to adjust the usage pattern by providing the updated usage algorithm to the at least one subsidiary data processing device. In accordance with this modification, the data processing device of the master device is provided with the respective state parameters by a respective subsidiary processing device in the subsidiary devices. The subsidiary processing device is hereby configured to monitor the subsidiary memory devices of the subsidiary device and to determine the respective state parameters for each subsidiary memory block in each subsidiary memory device. Further, the subsidiary processing device is configured to employ the updated usage algorithm received from the remote entity via the master device on the memory devices.

In accordance with these embodiments, the data processing device provided in the master device is enabled to not only report the state parameters for each block of its own memory device or memory devices, but may also report the state parameters for the blocks of all subsidiary memory devices that are included in the subsidiary devices which are part of the connected device system and are connected to the data processing device of the master device.

These embodiments therefore enable a reporting of the state parameters for a plurality of memory devices in multiple subsidiary devices and the subsequent application of a respective usage pattern using one central unit (i.e. the master device). This avoids the necessity for each subsidiary device to directly communicate with the remote entity via the network connection and instead employs the communication connection between the master device and the subsidiary devices that is already available in connected device systems, thereby reducing the amount of modification necessary to the connected system for implementing the monitoring and reporting functionality. To this end, the functionality may be implemented by installing a respective software update on the master device and the subsidiary devices without any hardware modifications needed.

In a further aspect of the present invention a monitoring system is presented which includes a master device as described herein above and a remote entity that is connected to said master device. The remote entity is adapted to receive the reporting from the master device on the at least one parameter of at least one respective memory block belonging to a non-volatile memory device and to update a usage algorithm for the non-volatile memory device comprising the at least one memory block based on the at least one state parameter. The remote entity is further adapted to transmit the updated usage algorithm to the master device.

According to this aspect, a monitoring system is provided which includes a master device and a remote entity that are communicatively connected to one another via a network service, such as a cloud service. The monitoring system enables an exchange of information between the master device of a connected device system and a remote entity regarding memory usage within the connected device system. This information exchange provides for a dynamic adjustment of the usage patterns for the memory devices in the connected device system that takes account of new user behavior, concentration on particular memory devices and new applications that may be employed in the connected device system which may require and adjustment of wear leveling and error correction in the memory devices in the master device. Furthermore, the system enables a reliable identification of erroneous memory devices or buggy driver software and may provide appropriate measures to prevent failure of the master device and/or the connected device system, such as indicating that the master device and/or the respective subsidiary devices need to be replaced or its respective driver software needs to be updated.

In some embodiments, the updating of a usage algorithm for non-volatile memory device comprises: determining a threshold value for the number of times an error correction has been performed on the memory blocks of the non-volatile memory device and receiving, from the master device, the number of times an error correction has been performed on at least one memory block of the non-volatile memory device. The updating further includes: comparing the received number of times an error correction has been performed with the threshold value and detecting at least one memory block for which the number of times an error correction has been performed exceeds said threshold value; wherein the updating the usage algorithm is based on said detecting.

In accordance with these embodiments, a threshold value is determined for the number of times an error correction shall be performed on a particular memory block of a memory device. Once this number of error corrections exceeds this threshold value, the remote entity may derive that the error correction code used is not appropriate for the memory block and/or the memory device. The remote entity may then determine a new error correction code for this memory device and include this error correction code in the updated usage algorithm. Alternatively, the remote entity may derive, based on the number of error corrections exceeding the threshold value, that the memory block is too prone to errors to be used any longer and may add the memory block to the list of bad blocks. The remote entity may then include a new list of bad blocks and an accordingly adjusted bad block management into the updated usage algorithm and provide the updated usage algorithm to the data processing device of the master device.

In some embodiments, the system further comprises at least one subsidiary device that is connected to the master device via a network connection, whereby the at least one subsidiary device comprises a non-volatile subsidiary memory device, which includes a plurality of subsidiary memory blocks. The reporting from the master device includes at least one state parameter for at least one subsidiary memory block of the non-volatile subsidiary memory device and the remote entity is further adapted for: updating a usage algorithm including a usage pattern for the non-volatile subsidiary memory device comprising the at least one subsidiary memory block based on the at least one state parameter for the respective subsidiary memory block and for transmitting the updated usage algorithm to the master device. To this end, the master device may employ the updated usage algorithm to adjust the usage pattern of its memory devices and further transmit the updated usage algorithm to the respective subsidiary devices to be employed to adjust the usage pattern of the subsidiary memory devices. Alternatively, the master device may adjust the usage pattern of the subsidiary memory devices directly.

In accordance with these embodiments, a system is provided in which the memory usage of all memory devices provided in the subsidiary devices as well as the master device of a connected device system may be monitored by one central unit, such as the master device. The system thereby enables an adjustment of the usage pattern of all memory devices by means of one remote entity which transmits an updated usage algorithm that takes account of the state parameters for all devices to the master device. The updated usage algorithm may then be employed by the master device and the subsidiary devices to adjust a system-wide usage pattern for the memory devices that optimizes the usage of each memory device in a manner that improves the lifetime of the memory devices. Thus, by means of this system, premature breakage of the master device and the subsidiary devices in a connected device system may be avoided.

In some embodiments, the updating a usage algorithm for the non-volatile memory device and the at least one non-volatile subsidiary memory device comprises: determining a number of times a respective memory block of the non-volatile memory device has been addressed in write operations and/or erase operations, determining a number of times a respective memory block of the non-volatile subsidiary memory device has been addressed in write operations and/or erase operations and detecting an increase or decrease in the number times each block has been addressed. The usage algorithm is then updated based on said increase.

By means of these embodiments, the remote entity may determine a sudden increase or decrease of write or erase operations for particular memory devices. The remote entity may derive a change in user behavior from this determination. More particularly, the remote entity may determine that the user now uses particular subsidiary devices more frequently, while the user has disregarded other subsidiary devices completely. Based on this determination, the remote entity updates the usage algorithm in a manner that accounts for the change in user behavior. For example, the updated usage algorithm may include a wear leveling and/or an error correction that is particularly suited for the memory devices that belong to subsidiary devices that are most frequently used. The updated usage algorithm may also include an indication to the master device to more frequently report state parameters for the memory devices that are more frequently accessed. Accordingly, the usage pattern of the memory devices in a connected device system may be adjusted to a new user behavior that has not been known previously, thereby leading to an enhancement in the lifetime of the memory devices and, therefore, the master device and the subsidiary devices.

In a further aspect of the present invention a method is presented, which may be employed for monitoring a usage pattern of at least one non-volatile memory device, the method comprising: retrieving at least one state parameter for at least one memory block of a plurality of memory blocks from at least one non-volatile memory device and reporting, via a network connection, the at least one state parameter for the respective memory block to a remote entity. The method further comprises: receiving an updated usage algorithm for the at least one non-volatile memory device from the remote entity, the updated usage pattern based on the at least one state parameter, and adjusting a usage pattern of the at least one non-volatile memory device in accordance with the updated usage algorithm. In some embodiments, the method further comprises: retrieving at least one state parameter for at least one subsidiary memory block of a plurality of memory blocks from at least one non-volatile subsidiary memory device, including the at least one parameter into the reporting to the remote entity, receiving an updated usage algorithm defining a usage pattern for the at least one non-volatile subsidiary memory device from the remote entity, the updated usage algorithm based on the at least one state parameter for the respective subsidiary memory block of the non-volatile subsidiary memory device, and adjusting the usage pattern for the non-volatile subsidiary memory device for the at least one subsidiary device in accordance with the updated usage algorithm.

In a further aspect of the present invention, a computer program for controlling a master device as described above is presented that comprises program code means to cause the master device to carry out the above-described method.

In a further aspect of the present invention, a monitoring system is provided comprising: a plurality of master devices and the remote entity connected to the plurality of master devices, wherein the remote entity is adapted for receiving the reporting from the at least one of the plurality of master devices on the at least one state parameter of at least one respective memory block belonging to the non-volatile memory device; updating the usage algorithm for the non-volatile memory device comprising the at least one memory block based on the at least one state parameter; and transmitting the updated usage algorithm to the multiple of the plurality of master devices.

One advantage of the present invention resides in an improvement of the memory usage of memory devices used in a connected device system and a subsequent improvement of the lifetime of said devices.

Another advantage resides in a reliable and fast detection of increased error susceptibility for particular batches or production series of memory devices to be utilized in connected device systems.

Another advantage resides in easier detectability of software issues, such as software bugs.

Another advantage resides in an adjustment of memory usage parameters to new applications for connected device systems with unknown user behavior.

Still further advantages of the present invention will be appreciated of those of ordinary skill in the art upon reading and understanding the specification in its entirety, in particular upon appreciating the detailed description of the exemplary embodiments as provided hereinafter.

It shall be understood that the master device of claim 1, the system of claim 9, the monitoring method of claim 13 and the computer program of claim 15 have similar and/or identical preferred embodiments, in particular, as defined in the dependent claims. It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically an embodiment of a system for monitoring memory usage comprising a master device and a remote entity communicating via a network.
Fig. 2 shows a flowchart illustrating an embodiment of a method for monitoring memory usage in the system as shown in Fig. 1.
Fig. 3 shows a flow chart illustrating an embodiment of a method for adjusting the usage pattern of the master device and the plurality of subsidiary devices in a connected device system.

### DETAILED DESCRIPTION OF EMBODIMENTS

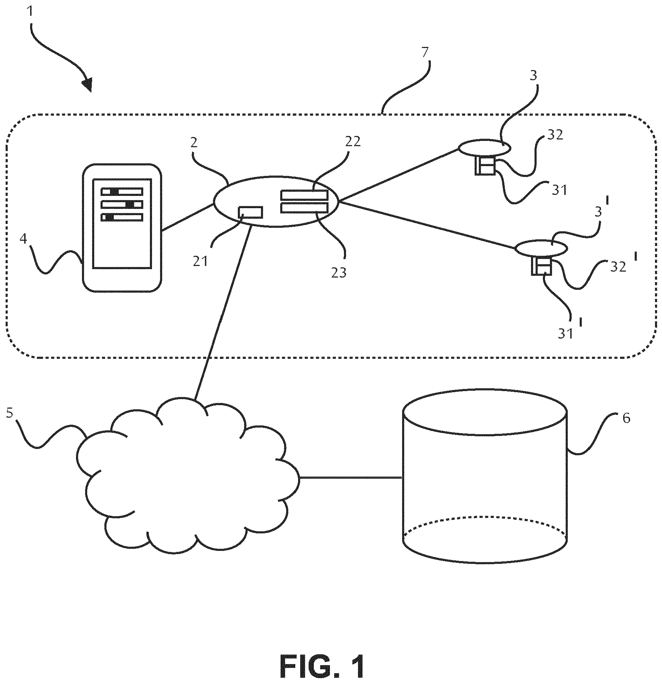

Fig. 1 schematically shows a system for monitoring memory usage in a connected device system according to an embodiment of the invention. The system 1 includes a master device 2 and a plurality of subsidiary devices 3, 3'. It is to be understood that although only two subsidiary devices 3, 3' are shown the exemplary embodiment of Fig. 1, the invention allows for an arbitrary number of subsidiary devices 3, 3' to be employed. The subsidiary devices 3, 3' are wirelessly connected to the master device 2 in a home network 7. The master device 2 comprises a data processing device 21 that is configured to cause the master device 2 to control the memory devices 22, 23 and to communicate with the subsidiary devices 3, 3', for example to indicate a change their respective settings. The subsidiary devices 3, 3' each comprise a respective subsidiary data processing device 31, 31' which is configured to cause the respective subsidiary device 3, 3' to monitor the subsidiary memory devices 32, 32' and to control the write and erase operations to the subsidiary memory devices 32, 32', the wear-leveling of the subsidiary memory device 32, 32' and the like. In the following, it shall be understood that whenever the master device 2 or the subsidiary devices 3, 3' perform a particular step or take a particular action, this action is enabled by the data processing device 21 and the subsidiary data processing devices 31, 31' causing the master device 2 and the subsidiary devices 3, 3', respectively, to perform said step or take that action.

In the embodiment of Fig. 1, the user accesses the master device 2 via a user interface provided by an application running on a respective user device 4, such as a smart phone, a tablet or other portable device that is connected to the master device 2. The user provides a respective user input which the master device 2 receives and which causes the master device 2 to perform the respective steps.

More particularly, the user may adjust the settings for the master device 2 and the subsidiary devices 3, 3', add further devices to the connected device system or remove certain devices from said connected device system through the user interface provided on the user device 4. The master device 2 receives the user input and adjusts its settings accordingly. Further, the master device 2 controls the subsidiary devices 3, 3' to likewise change their settings. As an example, the subsidiary devices 3, 3' may be lighting devices and the user input may indicate that subsidiary device 3 shall be switched on at 7 a.m. in the morning and switched off at 9 a.m. in the morning, and that subsidiary device 3' shall be switched on at 7 p.m. in the evening and shall switch off at 6 a.m. in the morning. The user may also indicate that subsidiary device 3' shall change its hue between 11 p.m. and 5 a.m., such as to be more comfortable during sleep.

During operation, the master device 2 monitors one or more state parameters for the memory blocks in the memory devices 22, 23. Further, the subsidiary devices 3, 3' monitor one or more state parameters for the subsidiary memory blocks in the respective subsidiary memory devices 32, 32'. The one or more state parameters of the subsidiary memory blocks of the subsidiary memory devices 32, 32' are provided to master device 2 by the subsidiary devices 3, 3'.

The master device 2 frequently reports the respective state parameters to remote entity 6, via a network service, such as cloud service 5. These state parameters typically include an indication of the number of times an error correction code has been used on particular memory blocks of the memory devices 22, 23 and of the subsidiary memory devices 32, 32' as well as a number of times a write/erase operation has been performed on each particular memory block. Furthermore, the state parameters may also include an indication, for each memory device 22, 23 and each subsidiary memory device 32, 32', of a ratio of still usable and no longer usable memory blocks, such as to be able to identify and replace erroneous memory devices in time.

The remote entity 6 receives these reports via the cloud service 5 and examines the state parameters such as to detect any increased count of error correction code or write/erase operations performed to particular memory blocks. The remote entity 6 may hereby detect that for a particular memory device 22, 23 and subsidiary memory device 32, 32' or a particular set of memory devices error correction has been performed more frequently and derive that these memory devices 22, 23 or these subsidiary memory devices 32, 32' may be subject to a hardware problem and need to be replaced or that they may experience problems with their driver software and an update of the software may be required.

Further, the remote entity 6 utilizes the state parameters to determine whether user behavior may have changed, for example by determining that particular memory devices 22, 23 and/or subsidiary memory devices 32, 32' have been more frequently accessed or that multiple new subsidiary devices 32, 32' including respective subsidiary memory devices have been added to the connected device system, and whether an update of the usage algorithm in the connected device system may be necessary to adjust the usage pattern of the memory devices 22, 23 and the subsidiary memory devices 32, 32' to the new user behavior.

When updating the usage algorithm, the remote entity 6 will take into account whether a particular batch of memory devices has an increased count of erroneous memory blocks, whether the current usage algorithm results in an uneven distribution of write and erase operations among the memory blocks of the memory devices, whether any irregularities in the error correction for particular memory devices have occurred, or the like.

If the remote entity 6 concludes that an update of the usage algorithm is necessary, the remote entity 6 determines such an updated usage algorithm that takes account of the issues reported for the respective memory devices and the changes made within the connected device system and provides the updated usage algorithm to the master device 2.

The master device 2 receives the updated usage algorithm. Typically, the updated usage algorithm is employed without user interaction on the memory devices 22, 23 of the master device 2 and on subsidiary memory devices 32, 32' of the subsidiary devices 3, 3', for example by updating the driver software of the connected device system.

However, the master device may optionally provide a respective indication to the user device 4, indicating to the user that a driver software update is available. To that end, the user may confirm or reject the driver software update. If the user confirms that the software shall be updated, the update is performed. If the user rejects that the software shall be updated, the update is skipped. The updated usage algorithm results in a new usage pattern for the memory devices 22, 23 and the subsidiary memory devices 32, 32' in the connected device system. For example, the new usage pattern may include a software update for the drivers of the memory devices that appeared to be erroneous or may induce a new wear leveling for the memory devices 22, 23 of the master device 2 and the subsidiary memory devices 32, 32' that takes account for the new user behavior.

In cases of hardware problems for one of the memory devices in the connected device system, the master device 2 can provide an indication to the user that the particular subsidiary device 3, 3' to which the memory device 32, 32' belongs should be replaced or will otherwise fail soon. In that context, the user interface may optionally be provided with a button or other element that enables the user to directly contact user services to take care of the erroneous hardware.

Upon adjusting the usage pattern, the master device 2 continues to monitor the memory usage of the memory devices 22, 23 and the subsidiary devices 3, 3' continue to monitor the memory usage of the subsidiary memory devices 32, 32'. The master device 2 further continues to frequently report the state parameters retrieved for the memory devices 22, 23 and the subsidiary memory devices 32, 32' to the remote entity 6 via cloud service 5 and may receive a further updated usage algorithm from the remote entity 6 once necessary.

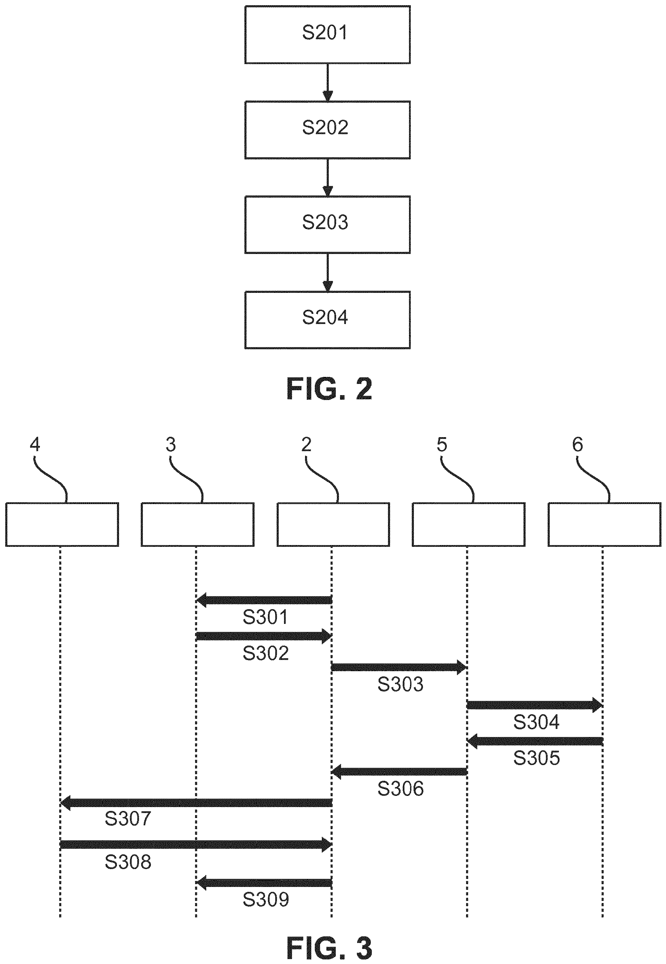

Fig. 2 illustrates a flow chart for a method for monitoring and reporting memory usage in a connected device system as performed by the master device 2 according to an embodiment. In step S201, the master device 2 communicates with subsidiary devices 3, 3' via a respective network connection to retrieve the state parameters for each subsidiary memory device 32, 32'. To that end, the subsidiary devices 3, 3' provide a state parameter for each respective subsidiary memory device 32, 32' to the master device 2. For example, the subsidiary devices 3, 3' may inform the master device 2 about a number of times an error correction has been performed on a particular memory block of a particular subsidiary memory device 32, 32' or a number of times a particular memory block of a particular subsidiary memory device 32, 32' has been subject to a write and erase operation. The master device 2 further internally accesses its own memory devices 22, 23 to retrieve the respective state parameters.

In step S202, the master device 2 then sends a report to the remote entity 6 including the state parameters for the memory devices 22, 23 and the subsidiary memory devices 32, 32'. These state parameters are hereby provided in a format that allows the remote entity 6 to map each state parameter to a respective memory device 22, 23 and a respective subsidiary memory device 32, 32' it has been retrieved from. The remote entity 6 then evaluates the state parameters for each memory device. The remote entity 6 may hereby determine that the memory device 32, 32' of a subsidiary device 3, 3' has an increased count for the number of error corrections performed on particular memory block. Further, the remote entity 6 may determine that one of the subsidiary memory devices 32, 32' of a subsidiary device 3, 3' has been accessed more frequently by the master device 2 or that new subsidiary devices have been added to the connected device system since the last report.

Subsequently, the remote entity 6 determines based on the state parameters whether an update of the usage algorithm may be necessary. If this is the case, the remote entity 6 generates a response including a respective updated usage algorithm und transmits this response to the master device 2.

In step S203, the master device 2 receives the response including the updated usage algorithm. The master device 2 then employs the updated usage algorithm by adjusting the usage pattern of its memory devices 21, 22. For example, the master device 2 may adjust the usage pattern such as to reduce the number of write and erase operations for a particular one of the memory devices 22, 23 that has shown an increased number of error corrections in the previous usage pattern. Further, the master device 2 provides the updated usage algorithms to the subsidiary devices 3, 3'.

In step S204, the subsidiary devices 3, 3' receive the updated usage algorithm from the master device 2. The subsidiary devices 3, 3' then employ the updated usage algorithm by adjusting the usage pattern of their subsidiary memory devices 32, 32'. For example, the subsidiary devices 3, 3' may adjust the usage pattern to utilize a different wear leveling on a respective subsidiary memory device 32, 32' for which an increase of write and erase operation of particular memory blocks has been observed.

Fig. 3 shows a more detailed flow chart of the method for monitoring and reporting memory usage in a connected device system including a master device 2 and a plurality of the subsidiary devices 3, 3' as described above, whereby only subsidiary device 3 is shown for ease of understanding.

In step S301, the master device 2 connects to subsidiary device 3 via a respective network connection to retrieve the state parameters of subsidiary memory device 32.

In step 302, the master device 2 retrieves the state parameters for the subsidiary memory blocks of subsidiary memory device 32 from subsidiary device 3 as described above and also retrieves the state parameters for the memory blocks of its own memory devices 22, 23.

In step 303, master device 2 connects to cloud service 5 and uploads the retrieved state parameters to cloud service 5 via the network connection. The state parameters may be stored in the cloud service 5 until the cloud service 5 is accessed by the remote entity 6. Alternatively, master device 2 may send a request along with the state parameters that the remote entity 6 shall directly access cloud service 5 without any delays.

In step S304, the cloud service 5 provides the state parameters to remote entity 6. The provision of the state parameters by the cloud service 5 may be performed in response to a request made by the remote entity 6 to provide all stored state parameters for all master devices that may access the cloud or may be performed in response to a request made by the master device 2 to directly transmit the state parameters to the remote entity 6. The remote entity 6 receives the state parameters in a format that allows the remote entity to map the state parameters to particular memory devices of a particular connected device system. The remote entity 6 evaluates the state parameters such as to determine whether particular memory devices or a set of particular memory devices show any irregularities, such as an increased number in error corrections performed on particular memory blocks or an increased amount of bad memory blocks listed.

Further, the remote entity 6 evaluates whether any particular memory device or any particular set of memory devices shows an increased number of write and erase operations for any particular memory blocks and determines any sudden changes in user behavior, such an increased addition of new subsidiary devices or a concentration on at least one of the subsidiary devices 3,3' in the connected device system. Based on this evaluation, the remote entity 6 determines whether the usage pattern of the memory usage in a particular connected device system shall be adjusted to compensate for the irregularities or adapt to the user behavior and generates a respective updated usage algorithm to be send to the master device 2 of the connected device system.

In step S305, the remote entity 6 transmits a response including the updated usage algorithm to the cloud service 5. The transmission comprises an indication that the cloud service 5 shall instantly connect to master device 2 to further transmit the response including the updated usage algorithm to the master device. Additionally, the transmission also comprises an indication that the cloud service 5 shall store the response including the updated user algorithm for the master device 2, such as to enable a later retrieval of the response in case the direct transmission to the master device 2 fails.

In step S306, the cloud service 5 transmits the response from the remote entity including the updated usage algorithm to the master device 2. The master device 2 receives the response including updated usage algorithm. The master device 2 determines that the response includes an updated usage algorithm.

In step S307, the master device 2 optionally sends a notification to the user device 4 that an updated usage algorithm has been provided and that the usage pattern for the memory devices of the connected device system needs to be adjusted in accordance with the updated usage algorithm. In response to this notification, the application on the user device 4 generates a respective message to be shown on the user interface, such as a pop-up message. The pop-up message may request a confirmation from the user that the updated usage algorithm shall be employed and the usage pattern shall be adjusted accordingly. The user may then confirm or reject the request.

In step S308, the user's response to the request is optionally transmitted to the master device 2. If the response to the request is negative and the request is rejected, the master device 2 will not employ the usage algorithm to adjust the usage pattern. Optionally, the master device 2 may transmit the rejection to the remote entity 6 via the cloud service 5 directly upon receipt of the rejection or may include the information about the rejection in the next report including the state parameters to be transmitted to the remote entity 6. To that end, the master device 2 may explicitly include the information about the rejection in the next report or may implicitly send the information about the rejection by providing respective state parameters from which the remote entity may derive that the updated usage algorithm has not been employed.

If the response is in the positive and the request is confirmed by the user, the master device 2 employs, in step S309, the updated usage algorithm, thereby adjusting the usage pattern of its own memory devices 22, 23. To this end, the master device further provides the updated usage algorithm to the subsidiary devices 3, 3' which adjust the usage pattern of the subsidiary memory devices 32, 32' in accordance with the updated usage algorithm. The adjustment of the usage pattern may hereby include an updating of the driver software of particular memory devices and a reduction of the load on memory devices that appear to have experienced an increase wear out in the previously applied usage pattern. Further, the adjustment may include an adjustment of wear leveling for memory devices for which particular memory blocks have shown to be subject to an increased number of write and erase operations. Finally, the new usage pattern may also take account for changes in user behavior, for example by optimizing wear leveling in particular with respect to those memory devices that are more frequently accessed.

In an embodiment, the state parameters of the memory devices in the connected device are retrieved and reported to the remote entity by one or more of the subsidiary devices. The subsidiary device directly reports the state parameters to the remote entity via the cloud service. To that end, possible subsidiary devices capable of reporting the state parameters may include, but not be limited to, sensors, switches, lamps or the like, having connection capability to connect to the remote entity.

In a further embodiment, the connected device system comprises multiple master devices, whereby each of the master devices or a subset thereof is connected to the remote entity. To this end, these master devices may be one of a lamp, a switch, a bridge or the like.

In a further embodiment, the employing of the usage algorithm may not be limited to change the usage pattern of the master devices and/or subsidiary devices of a connected device system, but may also be used to change usage parameters for further components of these systems which may suffer from wear-out, such as indicator lights, sensors or the like.

In a further embodiment, in the connected device system, master devices may be one of a lamp, a switch, a bridge or the like. Multiple of these master devices share the same memory banks as typically the memory banks are developed in the factory in batches. These batches are then later used in multiple master devices. The data processing device of at least one of the master devices can transmit the state parameter to the remote entity, which decides the corrective measure to the usage pattern based on the state parameter. The usage algorithm is sent to multiple master devices. All those master devices, which share the same memory bank receive the usage algorithm. Identification of the master device with the same memory bank can be done, for example, by the serial number of the memory bank, date of manufacture of the memory bank etc. Corrective action (usage algorithm) is then implemented in all the concerned master devices.

It is to be understood that the embodiments described herein merely constitute examples to further elucidate the teaching of the present invention. Other variations to the disclosed embodiments can be understood and effected by those skilled in the art in practicing the claimed invention from the study of the disclosure as a whole, the drawings and the appended claims.

Although the described embodiments relate to a connected lighting system with the subsidiary devices being respective lighting devices, it is to be understood that other connected device systems are contemplated in which a plurality of subsidiary devices are connected to a respective master device that is capable of monitoring and reporting memory usage of the non-volatile memory devices included in the subsidiary devices. It shall further be understood that, whenever the master device, the remote entity and the subsidiary devices are connected wirelessly in the described embodiments, these components or a subset thereof may also be connected using a wired connection. Likewise, whenever a wired connection is foreseen by the above embodiments, a wireless connection may also be employed.

Further, while in the current embodiments the state parameters observed relate to the number of times an error correction has been performed for a particular memory block and the number of times a memory block has been written or erased, other state parameters are also contemplated that may be used as an indication of insufficient wear leveling or (flash) memory usage.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Procedures like a retrieving of at least one state parameter for at least one memory block performed by one or several elements of the master device or an updating and/or transmission of a usage algorithm performed by one or several elements of the remote entity can be performed by any other number of elements or devices of the master device or the remote entity. These procedures and/or a control of the master device and/or of the remote entity in accordance with the method for monitoring memory usage can be implemented as program code means of a computer program and/or as dedicated hardware.

A computer program may be stored and/or distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a master device for monitoring and reporting memory usage in a connected device system including further subsidiary devices to a remote entity via a cloud service. Further, the invention relates to a system comprising the master device and the remote entity that is employed for monitoring memory usage. The invention also relates to a respective method and a computer program for executing the method on the master device. In order to allow the master device and the subsidiary devices to use their respective memory devices in a manner that avoids quick wear out, the usage pattern is frequently monitored to account for any changes in user behavior and to provide an improved usage algorithm to the memory devices that adjusts the usage pattern in accordance with the new requirements.

## Claims

1. A monitoring system, comprising:
a plurality of master devices (2) each comprising:
at least one non-volatile memory device and at least one data processing device (21); wherein the non-volatile memory device (22, 23) comprises a plurality of memory blocks, wherein each block is **characterized by** at least one state parameter; and
wherein the data processing device (21) is programmed to:
retrieve the at least one state parameter for at least one memory block of the plurality of memory blocks from the non-volatile memory device (22, 23);
report the at least one state parameter for the respective memory block to a remote entity (6) via a network;
receive, from the remote entity (6), a response to the reporting comprising an updated usage algorithm for the non-volatile memory device (22, 23); and
adjust a usage pattern of the non-volatile memory device (22, 23) in accordance with the updated usage algorithm; and
the monitoring system further comprises the remote entity (6) connected to the plurality of master devices (2), wherein the remote entity (6) is adapted for:
receiving the reporting from the at least one of the plurality of master devices (2) on the at least one state parameter of at least one respective memory block belonging to the non-volatile memory device (22, 23);
updating the usage algorithm for the non-volatile memory device (22, 23) comprising the at least one memory block based on the at least one state parameter; and
transmitting the updated usage algorithm to multiple of the plurality of master devices (2).

2. The monitoring system according to claim 1, wherein the updating a usage algorithm for non-volatile memory device (22, 23) comprises:
determining a threshold value for a number of times an error correction has been performed on the memory blocks of the non-volatile memory device;
receiving, from the master device (2), the number of times an error correction has been performed on at least one memory block of the non-volatile memory device (22, 23);
comparing the received number of times an error correction has been performed with the threshold value; and
detecting at least one memory block for which the number of times an error correction has been performed exceeds said threshold value; wherein the updating the usage algorithm is based on said detecting.

3. The monitoring system according to claim 1, further comprising:
at least one subsidiary device (3, 3') connected to the master device (2) via a network connection, the at least one subsidiary device (3, 3') comprising at least one non-volatile subsidiary memory device (32, 32') comprising a plurality of subsidiary memory blocks;
wherein the reporting from the master device (2) includes at least one state parameter for at least one subsidiary memory block of the at least one non-volatile subsidiary memory device (32, 32'); and wherein the remote entity (6) is further adapted for:
updating a usage algorithm including a usage pattern for the non-volatile subsidiary memory device (32, 32') comprising the at least one subsidiary memory block based on the at least one state parameter for the respective subsidiary memory block; and
transmitting the updated usage algorithm to the master device (2).

4. The monitoring system according to claim 3, wherein the updating a usage algorithm for the non-volatile memory device (22, 23) and the at least one non-volatile subsidiary memory device (32, 32') comprises:
determining a number of times a respective memory block of the at least one non-volatile memory device (22, 23) has been addressed in write operations and/or erase operations;
determining a number of times a respective memory block of the non-volatile subsidiary memory device (32, 32') has been addressed in write operations and/or erase operations;
detecting an increase or decrease in the number times each block has been addressed; and
updating, based on said increase, the usage algorithm.

5. A master device for use in the monitoring system according to claim 1, comprising:
at least one non-volatile memory device (22, 23) comprising a plurality of memory blocks, wherein each block is **characterized by** at least one state parameter; and
at least one data processing device (21) programmed to:
retrieve the at least one state parameter for at least one memory block of the plurality of memory blocks from the non-volatile memory device (22, 23);
report the at least one state parameter for the respective memory block to the remote entity (6) via a network;
receive, from the remote entity (6), a response to the reporting comprising an updated usage algorithm for the non-volatile memory device (22, 23); and
adjust a usage pattern of the non-volatile memory device (22, 23) in accordance with the updated usage algorithm.

6. The master device according to claim 5, wherein
the at least one state parameter comprises an information about a number of times an error correction has been performed on the respective memory block.

7. The master device according to claim 5, wherein
the at least one state parameter comprises an information about a number of times the respective memory block has been addressed in a write operation and/or an erase operation.

8. The master device according to claim 5, wherein
the at least one data processing device (21) is further programmed to:
retrieve at least one state parameter for each memory block of the plurality of memory blocks; and
determine, based on the state parameters, for each memory block an indication whether said memory block may still be addressed in a write operation and/or an erase operation; wherein
the reporting includes transmitting said indication to the remote entity (6).

9. The master device according to claim 8, wherein the data processing device is further programmed to:
determine whether a memory block may still be addressed in a write operation and/or an erase operation, whereby the determining comprises:
calculating a ratio of a first subset of memory blocks, comprising memory blocks that may still be addressed, and a second subset of memory blocks, comprising memory blocks that may not be addressed.

10. The master device according to claim 5, wherein the master device (2) is connected to at least one subsidiary device (3, 3') via the network, the at least one subsidiary device (3, 3') comprising at least one non-volatile subsidiary memory device (32, 32') comprising a plurality of subsidiary memory blocks; wherein
the at least one data processing device (21) is further programmed to:
retrieve at least one state parameter for at least one subsidiary memory block;
include the at least one state parameter for the at least one subsidiary memory block into the reporting to the remote entity (6);
receive a response from the remote entity (6) comprising an updated usage algorithm for the at least one non-volatile subsidiary memory device (32, 32') of the at least one subsidiary device (3, 3');
adjust the usage pattern of the non-volatile subsidiary memory device (32, 32') in accordance with the updated usage algorithm for the at least one non-volatile subsidiary memory device (32, 32').

11. The master device according to claim 10, wherein
the at least one subsidiary device (3, 3') comprises at least one subsidiary data processing device (31, 31'); and
the at least one data processing device (21) is further programmed to:
retrieve the at least one state parameter for at least one subsidiary memory block from the at least one subsidiary data processing device (31, 31'); and
adjust the usage pattern by providing the updated usage algorithm to the at least one subsidiary data processing device (31, 31').

12. The master device according to claim 10, wherein
the at least one non-volatile memory device (22, 23) and/or the at least one subsidiary memory device (32, 32') comprise a flash memory device.

13. A method for monitoring a usage pattern of at least one non-volatile memory device (22, 23), comprising:
retrieving, at least one state parameter for at least one memory block of a plurality of memory blocks from at least one non-volatile memory device (22, 23) of at least one of the plurality of master devices (2);
reporting, via a network connection, the at least one state parameter for the respective memory block to a remote entity (6);
receiving an updated usage algorithm for the at least one non-volatile memory device (22, 23) from the remote entity (6), the updated usage algorithm based on the at least one state parameter, and
adjusting a usage pattern of the at least one non-volatile memory device (22, 23) of multiple of the plurality of master devices (2) in accordance with the updated usage algorithm.

14. The method for monitoring a usage pattern of at least one non-volatile memory device (22, 23) according to claim 13, further comprising:
retrieving at least one state parameter for at least one subsidiary memory block of a plurality of memory blocks from at least one non-volatile subsidiary memory device (32, 32');
including the at least one parameter into the reporting to the remote entity (6);
receiving an updated usage algorithm defining a usage pattern for the at least one non-volatile subsidiary memory device (32, 32') from the remote entity (6), the updated usage algorithm based on the at least one state parameter for the respective subsidiary memory block of the at least one non-volatile subsidiary memory device (32, 32'); and
adjusting the usage pattern for the at least one non-volatile subsidiary memory device (32, 32') in accordance with the updated usage algorithm.

15. A computer program for controlling a plurality of master devices (2) according to claim 1, wherein the computer program comprises program code means for causing the master device (2) to carry out the method according to claim 13 when the program is executed by the master device.

## Patentansprüche

1. Überwachungssystem, umfassend:
eine Mehrzahl von Mastergeräten (2) mit jeweils:
mindestens einer nichtflüchtigen Speichervorrichtung und mindestens einer Datenverarbeitungsvorrichtung (21); wobei die nichtflüchtige Speichervorrichtung (22, 23) eine Vielzahl von Speicherblöcken umfasst, wobei jeder Block durch mindestens einen Zustandsparameter gekennzeichnet ist; und wobei die Datenverarbeitungsvorrichtung (21) so programmiert ist, dass sie:
den mindestens einen Zustandsparameter für mindestens einen Speicherblock der Vielzahl von Speicherblöcken aus der nichtflüchtigen Speichervorrichtung (22, 23) abruft;
einer entfernt liegenden Entität (6) den mindestens einen Zustandsparameter für den jeweiligen Speicherblock über ein Netzwerk meldet;
von der entfernt liegenden Entität (6) eine Antwort auf die Meldung mit einem aktualisierten Nutzungsalgorithmus für die nichtflüchtige Speichervorrichtung (22, 23) empfängt; und
ein Nutzungsmuster der nichtflüchtigen Speichervorrichtung (22, 23) entsprechend dem aktualisierten Nutzungsalgorithmus anpasst; und
das Überwachungssystem weiterhin die mit der Mehrzahl von Mastergeräten (2) verbundene, entfernt liegende Entität (6) umfasst, wobei die entfernt liegende Entität (6) so eingerichtet ist, dass sie:
die Meldung von dem mindestens einen der Mehrzahl von Mastergeräten (2) auf dem mindestens einen Zustandsparameter von mindestens einem zu der nichtflüchtigen Speichervorrichtung (22, 23) gehörenden, jeweiligen Speicherblock empfängt;
den Nutzungsalgorithmus für die nichtflüchtige Speichervorrichtung (22, 23) mit dem mindestens einen Speicherblock auf der Grundlage des mindestens einen Zustandsparameters aktualisiert; und
den aktualisierten Nutzungsalgorithmus zu mehreren der Mehrzahl von Mastergeräten (2) überträgt.

2. Überwachungssystem nach Anspruch 1, wobei die Aktualisierung eines Nutzungsalgorithmus für die nichtflüchtige Speichervorrichtung (22, 23) beinhaltet, dass:
ein Schwellenwert für eine Anzahl Male, wie oft eine Fehlerkorrektur auf den Speicherblöcken der nichtflüchtigen Speichervorrichtung durchgeführt wurde, ermittelt wird;
von dem Mastergerät (2) die Anzahl Male, wie oft eine Fehlerkorrektur auf mindestens einem Speicherblock der nichtflüchtigen Speichervorrichtung (22, 23) durchgeführt wurde, empfangen wird;
die empfangene Anzahl Male, wie oft eine Fehlerkorrektur durchgeführt wurde, mit dem Schwellenwert verglichen wird; und
detektiert wird, dass mindestens ein Speicherblock, für den die Anzahl Male, wie oft eine Fehlerkorrektur durchgeführt wurde, diesen Schwellenwert überschreitet; wobei die Aktualisierung des Nutzungsalgorithmus auf dieser Detektierung basiert.

3. Überwachungssystem nach Anspruch 1, das weiterhin umfasst:
mindestens ein untergeordnetes Gerät (3, 3'), das mit dem Mastergerät (2) über eine Netzwerkverbindung verbunden ist, wobei das mindestens eine untergeordnete Gerät (3, 3') mindestens eine nichtflüchtige, untergeordnete Speichervorrichtung (32, 32') mit einer Vielzahl untergeordneter Speicherblöcke umfasst;
wobei die Meldung von dem Mastergerät (2) mindestens einen Zustandsparameter für mindestens einen untergeordneten Speicherblock der mindestens einen nichtflüchtigen, untergeordneten Speichervorrichtung (32, 32') enthält; und wobei die entfernt liegende Entität (6) weiterhin so eingerichtet ist, dass sie:
einen Nutzungsalgorithmus mit einem Nutzungsmuster für die nichtflüchtige, untergeordnete Speichervorrichtung (32, 32') mit dem mindestens einen untergeordneten Speicherblock auf der Grundlage des mindestens einen Zustandsparameters für den jeweiligen untergeordneten Speicherblock aktualisiert; und
den aktualisierten Nutzungsalgorithmus zu dem Mastergerät (2) überträgt.

4. Überwachungssystem nach Anspruch 1, wobei das Aktualisieren eines Nutzungsalgorithmus für die nichtflüchtige Speichervorrichtung (22, 23) und die mindestens eine nichtflüchtige, untergeordnete Speichervorrichtung (32, 32') beinhaltet, dass:
eine Anzahl Male, wie oft ein jeweiliger Speicherblock der mindestens einen nichtflüchtigen Speichervorrichtung (22, 23) bei Schreiboperationen und/oder Löschoperationen adressiert wurde, ermittelt wird;
eine Anzahl Male, wie oft ein jeweiliger Speicherblock der nichtflüchtigen, untergeordneten Speichervorrichtung (32, 32') bei Schreiboperationen und/oder Löschoperationen adressiert wurde, ermittelt wird;
eine Zunahme oder Abnahme der Anzahl Male, wie oft jeder Block adressiert wurde, detektiert wird; und
der Nutzungsalgorithmus aufgrund dieser Zunahme aktualisiert wird.

5. Mastergerät zum Einsatz in dem Überwachungssystem nach Anspruch 1, umfassend:
mindestens eine nichtflüchtige Speichervorrichtung (22, 23) mit einer Vielzahl von Speicherblöcken, wobei jeder Block durch mindestens einen Zustandsparameter gekennzeichnet ist; sowie
mindestens eine Datenverarbeitungsvorrichtung (21), die so programmiert ist, dass sie:
den mindestens einen Zustandsparameter für mindestens einen Speicherblock der Vielzahl von Speicherblöcken aus der nichtflüchtigen Speichervorrichtung (22, 23) abruft;
den mindestens einen Zustandsparameter für den jeweiligen Speicherblock der entfernt liegenden Entität (6) über ein Netzwerk meldet;
von der entfernt liegenden Entität (6) eine Antwort auf die Meldung mit einem aktualisierten Nutzungsalgorithmus für die nichtflüchtige Speichervorrichtung (22, 23) empfängt; und
ein Nutzungsmuster der nichtflüchtigen Speichervorrichtung (22, 23) in Übereinstimmung mit dem aktualisierten Nutzungsalgorithmus anpasst.

6. Mastergerät nach Anspruch 5, wobei
der mindestens eine Zustandsparameter Informationen über eine Anzahl Male, wie oft eine Fehlerkorrektur auf dem jeweiligen Speicherblock durchgeführt wurde, umfasst.

7. Mastergerät nach Anspruch 5, wobei
der mindestens eine Zustandsparameter Informationen über eine Anzahl Male, wie oft der jeweilige Speicherblock bei einer Schreiboperation und/oder einer Löschoperation adressiert wurde, umfasst.

8. Mastergerät nach Anspruch 5, wobei
die mindestens eine Datenverarbeitungsvorrichtung (21) weiterhin so programmiert ist, dass sie:
mindestens einen Zustandsparameter für jeden Speicherblock der Vielzahl von Speicherblöcken abruft; und
auf der Grundlage der Zustandsparameter für jeden Speicherblock eine Angabe darüber ermittelt, ob dieser Speicherblock bei einer Schreiboperation und/oder einer Löschoperation noch adressiert werden kann; wobei
die Meldung die Übertragung dieser Angabe zu der entfernt liegenden Entität (6) beinhaltet.

9. Mastergerät nach Anspruch 8, wobei die Datenverarbeitungsvorrichtung weiterhin so programmiert ist, dass sie:
ermittelt, ob ein Speicherblock bei einer Schreiboperation und/oder einer Löschoperation noch adressiert werden kann, wobei das Ermitteln beinhaltet, dass:
ein Verhältnis zwischen einer ersten Submenge von Speicherblöcken mit Speicherblöcken, die noch adressiert werden dürfen, und einer zweiten Submenge von Speicherblöcken mit Speicherblöcken, die nicht adressiert werden dürfen, berechnet wird.

10. Mastergerät nach Anspruch 5, wobei das Mastergerät (2) mit mindestens einem untergeordneten Gerät (3, 3') über das Netzwerk verbunden ist, wobei das zumindest eine untergeordnete Gerät (3, 3') mindestens eine nichtflüchtige, untergeordnete Speichervorrichtung (32, 32') mit einer Vielzahl von untergeordneten Speicherblöcken umfasst; wobei
die mindestens eine Datenverarbeitungsvorrichtung (21) weiterhin so programmiert ist, dass sie:
mindestens einen Zustandsparameter für mindestens einen untergeordneten Speicherblock abruft;
den mindestens einen Zustandsparameter für den mindestens einen untergeordneten Speicherblock in die Meldung zu der entfernt liegenden Entität (6) aufnimmt;
eine Antwort von der entfernt liegenden Entität (6) mit einem aktualisierten Nutzungsalgorithmus für die mindestens eine nichtflüchtige, untergeordnete Speichervorrichtung (32, 32') des mindestens einen untergeordneten Geräts (3, 3') empfängt;
das Nutzungsmuster der nichtflüchtigen, untergeordneten Speichervorrichtung (32, 32') in Übereinstimmung mit dem aktualisierten Nutzungsalgorithmus für die mindestens eine nichtflüchtige, untergeordnete Speichervorrichtung (32, 32') anpassst.

11. Mastergerät nach Anspruch 10, wobei
das mindestens eine untergeordnete Gerät (3, 3') mindestens eine untergeordnete Datenverarbeitungsvorrichtung (31, 31') umfasst; und
die mindestens eine Datenverarbeitungsvorrichtung (21) weiterhin so programmiert ist, dass sie:
den mindestens einen Zustandsparameter für mindestens einen untergeordneten Speicherblock von der mindestens einen untergeordneten Datenverarbeitungsvorrichtung (31, 31') abruft; und
das Nutzungsmuster durch Zuführen des aktualisierten Nutzungsalgorithmus zu der mindestens einen untergeordneten Datenverarbeitungsvorrichtung (31, 31') anpasst.

12. Mastergerät nach Anspruch 10, wobei
die mindestens eine nichtflüchtige Speichervorrichtung (22, 23) und/oder die mindestens eine untergeordnete Speichervorrichtung (32, 32') eine Flash-Speichervorrichtung (32, 32') umfassen/umfasst.

13. Verfahren zur Überwachung eines Nutzungsmusters von mindestens einer nichtflüchtigen Speichervorrichtung (22, 23), das beinhaltet, dass:
mindestens ein Zustandsparameter für mindestens einen Speicherblock einer Vielzahl von Speicherblöcken aus mindestens einer nichtflüchtigen Speichervorrichtung (22, 23) von mindestens einem der Mehrzahl von Mastergeräten (2) abgerufen wird;
einer entfernt liegenden Entität (6) der mindestens eine Zustandsparameter für den jeweiligen Speicherblock über eine Netzwerkverbindung gemeldet wird;
von der entfernt liegenden Entität (6) ein aktualisierter Nutzungsalgorithmus für die mindestens eine nichtflüchtige Speichervorrichtung (22, 23) empfangen wird, wobei der aktualisierte Nutzungsalgorithmus auf dem mindestens einen Zustandsparameter basiert; und
ein Nutzungsmuster der mindestens einen nichtflüchtigen Speichervorrichtung (22, 23) von mehreren der Mehrzahl von Mastergeräten (2) entsprechend dem aktualisierten Nutzungsalgorithmus angepasst wird.

14. Verfahren zur Überwachung eines Nutzungsmusters von mindestens einer nichtflüchtigen Speichervorrichtung (22, 23) nach Anspruch 13, das weiterhin beinhaltet, dass:
mindestens ein Zustandsparameter für mindestens einen untergeordneten Speicherblock einer Vielzahl von Speicherblöcken aus mindestens einer nichtflüchtigen, untergeordneten Speichervorrichtung (32, 32') abgerufen wird;
der mindestens eine Zustandsparameter in die Meldung zu der entfernt liegenden Entität (6) aufgenommen wird;
ein aktualisierter Nutzungsalgorithmus, der ein Nutzungsmuster für die mindestens eine nichtflüchtige, untergeordnete Speichervorrichtung (32, 32') definiert, von der entfernt liegenden Entität (6) empfangen wird, wobei der aktualisierte Nutzungsalgorithmus auf dem mindestens einen Zustandsparameter für den jeweiligen untergeordneten Speicherblock der mindestens einen nichtflüchtigen, untergeordneten Speichervorrichtung (32, 32') basiert; und
das Nutzungsmuster für die mindestens eine nichtflüchtige, untergeordnete Speichervorrichtung (32, 32') in Übereinstimmung mit dem aktualisierten Nutzungsalgorithmus angepasst wird.

15. Computerprogramm zur Steuerung einer Mehrzahl von Mastergeräten (2) nach Anspruch 1, wobei das Computerprogramm Programmcodemittel umfasst, um das Mastergerät (2) zu veranlassen, das Verfahren nach Anspruch 13 auszuführen, wenn das Programm durch das Mastergerät ausgeführt wird.

## Revendications

1. Système de surveillance, comprenant :
une pluralité de dispositifs maîtres (2) comprenant chacun :
au moins un dispositif à mémoire non volatile et au moins un dispositif de traitement de données (21) ; dans lequel le dispositif à mémoire non volatile (22, 23) comprend une pluralité de blocs de mémoire, dans lequel chaque bloc est **caractérisé par** au moins un paramètre d'état ; et dans lequel le dispositif de traitement de données (21) est programmé pour :
récupérer le au moins un paramètre d'état pour au moins un bloc de mémoire de la pluralité de blocs de mémoire à partir du dispositif à mémoire non volatile (22, 23) ;
rapporter le au moins un paramètre d'état pour le bloc de mémoire respectif à une entité distante (6) via un réseau ;
recevoir, à partir de l'entité distante (6), une réponse au rapport comprenant un algorithme d'usage mis à jour pour le dispositif à mémoire non volatile (22, 23) ; et
ajuster un schéma d'usage du dispositif à mémoire non volatile (22, 23) conformément à l'algorithme d'usage mis à jour ; et
le système de surveillance comprend en outre l'entité distante (6) connectée à la pluralité de dispositifs maîtres (2), dans lequel l'entité distante (6) est adaptée pour :
recevoir le rapport à partir du au moins un de la pluralité de dispositifs maîtres (2) sur le au moins un paramètre d'état d'au moins un bloc de mémoire respectif appartenant au dispositif à mémoire non volatile (22, 23) ;
mettre à jour l'algorithme d'usage pour le dispositif à mémoire non volatile (22, 23) comprenant le au moins un bloc de mémoire sur la base du au moins un paramètre d'état ; et
transmettre l'algorithme d'usage mis à jour à plusieurs de la pluralité de dispositifs maîtres (2).

2. Système de surveillance selon la revendication 1, dans lequel la mise à jour d'un algorithme d'usage pour le dispositif à mémoire non volatile (22, 23) comprend :
une détermination d'une valeur de seuil pour un nombre de fois où une correction d'erreurs a été mise en œuvre sur les blocs de mémoire du dispositif à mémoire non volatile ;
une réception, à partir du dispositif maître (2), du nombre de fois où une correction d'erreurs a été mise en œuvre sur au moins un bloc de mémoire du dispositif à mémoire non volatile (22, 23) ;
une comparaison du nombre reçu de fois où une correction d'erreurs a été mise en œuvre avec la valeur de seuil ; et
une détection d'au moins un bloc de mémoire pour lequel le nombre de fois où une correction d'erreurs a été mise en œuvre dépasse ladite valeur de seuil ; dans lequel la mise à jour de l'algorithme d'usage est basée sur ladite détection.

3. Système de surveillance selon la revendication 1, comprenant en outre :
au moins un dispositif auxiliaire (3, 3') connecté au dispositif maître (2) via une connexion réseau, le au moins un dispositif auxiliaire (3, 3') comprenant au moins un dispositif à mémoire auxiliaire non volatile (32, 32') comprenant une pluralité de blocs de mémoire auxiliaires ;
dans lequel le rapport à partir du dispositif maître (2) inclut au moins un paramètre d'état pour au moins un bloc de mémoire auxiliaire du au moins un dispositif à mémoire auxiliaire non volatile (32, 32') ; et dans lequel l'entité distante (6) est en outre adaptée pour :
mettre à jour un algorithme d'usage incluant un schéma d'usage pour le dispositif à mémoire auxiliaire non volatile (32, 32') comprenant le au moins un bloc de mémoire auxiliaire sur la base du au moins un paramètre d'état pour le bloc de mémoire auxiliaire respectif ; et
transmettre l'algorithme d'usage mis à jour au dispositif maître (2).

4. Système de surveillance selon la revendication 3, dans lequel la mise à jour d'un algorithme d'usage pour le dispositif à mémoire non volatile (22, 23) et le au moins un dispositif à mémoire auxiliaire non volatile (32, 32') comprend :
une détermination d'un nombre de fois où un bloc de mémoire respectif du au moins un dispositif à mémoire non volatile (22, 23) a été adressé dans des opérations d'écriture et/ou des opérations d'effacement ;
une détermination d'un nombre de fois où un bloc de mémoire respectif du dispositif à mémoire auxiliaire non volatile (32, 32') a été adressé dans des opérations d'écriture et/ou des opérations d'effacement ;
une détection d'une augmentation ou diminution du nombre de fois où chaque bloc a été adressé ; et
une mise à jour, sur la base de ladite augmentation, de l'algorithme d'usage.

5. Dispositif maître pour une utilisation dans le système de surveillance selon la revendication 1, comprenant :
au moins un dispositif à mémoire non volatile (22, 23) comprenant une pluralité de blocs de mémoire, dans lequel chaque bloc est **caractérisé par** au moins un paramètre d'état ; et
au moins un dispositif de traitement de données (21) programmé pour :
récupérer le au moins un paramètre d'état pour au moins un bloc de mémoire de la pluralité de blocs de mémoire à partir du dispositif à mémoire non volatile (22, 23) ;
rapporter le au moins un paramètre d'état pour le bloc de mémoire respectif à l'entité distante (6) via un réseau ;
recevoir, à partir de l'entité distante (6), une réponse au rapport comprenant un algorithme d'usage mis à jour pour le dispositif à mémoire non volatile (22, 23) ; et
ajuster un schéma d'usage du dispositif à mémoire non volatile (22, 23) conformément à l'algorithme d'usage mis à jour.

6. Dispositif maître selon la revendication 5, dans lequel
le au moins un paramètre d'état comprend une information sur un nombre de fois où une correction d'erreurs a été mise en œuvre sur le bloc de mémoire respectif.

7. Dispositif maître selon la revendication 5, dans lequel
le au moins un paramètre d'état comprend une information sur un nombre de fois où le bloc de mémoire respectif a été adressé dans une opération d'écriture et/ou une opération d'effacement.

8. Dispositif maître selon la revendication 5, dans lequel
le au moins un dispositif de traitement de données (21) est en outre programmé pour :
récupérer au moins un paramètre d'état pour chaque bloc de mémoire de la pluralité de blocs de mémoire ; et
déterminer, sur la base des paramètres d'état, pour chaque bloc de mémoire une indication si ledit bloc de mémoire peut toujours être adressé dans une opération d'écriture et/ou une opération d'effacement ; dans lequel
le rapport inclut une transmission de ladite indication à l'entité distante (6).

9. Dispositif maître selon la revendication 8, dans lequel le dispositif de traitement de données est en outre programmé pour :
déterminer si un bloc de mémoire peut toujours être adressé dans une opération d'écriture et/ou une opération d'effacement, selon lequel la détermination comprend :
un calcul d'un rapport d'un premier sous-ensemble de blocs de mémoire, comprenant des blocs de mémoire qui peuvent toujours être adressés, et un second sous-ensemble de blocs de mémoire, comprenant des blocs de mémoire qui peuvent ne pas être adressés.

10. Dispositif maître selon la revendication 5, dans lequel le dispositif maître (2) est connecté à au moins un dispositif auxiliaire (3, 3') via le réseau, le au moins un dispositif auxiliaire (3, 3') comprenant au moins un dispositif à mémoire auxiliaire non volatile (32, 32') comprenant une pluralité de blocs de mémoire auxiliaires ; dans lequel
le au moins un dispositif de traitement de données (21) est en outre programmé pour :
récupérer au moins un paramètre d'état pour au moins un bloc de mémoire auxiliaire ;
inclure le au moins un paramètre d'état pour le au moins un bloc de mémoire auxiliaire dans le rapport à l'entité distante (6) ;
recevoir une réponse à partir de l'entité distante (6) comprenant un algorithme d'usage mis à jour pour le au moins un dispositif à mémoire auxiliaire non volatile (32, 32') du au moins un dispositif auxiliaire (3, 3') ;
ajuster le schéma d'usage du dispositif à mémoire auxiliaire non volatile (32, 32') conformément à l'algorithme d'usage mis à jour pour le au moins un dispositif à mémoire auxiliaire non volatile (32, 32').

11. Dispositif maître selon la revendication 10, dans lequel
le au moins un dispositif auxiliaire (3, 3') comprend au moins un dispositif de traitement de données auxiliaire (31, 31') ; et
le au moins un dispositif de traitement de données (21) est en outre programmé pour :
récupérer le au moins un paramètre d'état pour au moins un bloc de mémoire auxiliaire à partir du au moins un dispositif de traitement de données auxiliaire (31, 31') ; et
ajuster le schéma d'usage en fournissant l'algorithme d'usage mis à jour au au moins un dispositif de traitement de données auxiliaire (31, 31').

12. Dispositif maître selon la revendication 10, dans lequel
le au moins un dispositif à mémoire non volatile (22, 23) et/ou le au moins un dispositif à mémoire auxiliaire (32, 32') comprennent un dispositif à mémoire flash.

13. Procédé permettant de surveiller un schéma d'usage d'au moins un dispositif à mémoire non volatile (22, 23), comprenant :
une récupération d'au moins un paramètre d'état pour au moins un bloc de mémoire d'une pluralité de blocs de mémoire à partir d'au moins un dispositif à mémoire non volatile (22, 23) d'au moins un de la pluralité de dispositifs maîtres (2) ;
un rapport, via une connexion réseau, du au moins un paramètre d'état pour le bloc de mémoire respectif à une entité distante (6) ;
une réception d'un algorithme d'usage mis à jour pour le au moins un dispositif à mémoire non volatile (22, 23) à partir de l'entité distante (6), l'algorithme d'usage mis à jour étant basé sur le au moins un paramètre d'état, et
un ajustement d'un schéma d'usage du au moins un dispositif à mémoire non volatile (22, 23) parmi plusieurs de la pluralité de dispositifs maîtres (2) conformément à l'algorithme d'usage mis à jour.

14. Procédé permettant de surveiller un schéma d'usage d'au moins un dispositif à mémoire non volatile (22, 23) selon la revendication 13, comprenant en outre :
une récupération d'au moins un paramètre d'état pour au moins un bloc de mémoire auxiliaire d'une pluralité de blocs de mémoire à partir d'au moins un dispositif à mémoire auxiliaire non volatile (32, 32') ;
une inclusion du au moins un paramètre dans le rapport à l'entité distante (6) ;
une réception d'un algorithme d'usage mis à jour définissant un schéma d'usage pour le au moins un dispositif à mémoire auxiliaire non volatile (32, 32') à partir de l'entité distante (6), l'algorithme d'usage mis à jour étant basé sur le au moins un paramètre d'état pour le bloc de mémoire auxiliaire respectif du au moins un dispositif à mémoire auxiliaire non volatile (32, 32') ; et
un ajustement du schéma d'usage pour le au moins un dispositif à mémoire auxiliaire non volatile (32, 32') conformément à l'algorithme d'usage mis à jour.

15. Programme d'ordinateur permettant de commander une pluralité de dispositifs maîtres (2) selon la revendication 1, dans lequel le programme d'ordinateur comprend un moyen de code de programme permettant d'amener le dispositif maître (2) à mener à bien le procédé selon la revendication 13 lorsque le programme est exécuté par le dispositif maître.
